# EUROPEAN PATENT APPLICATION

(11) **EP 1 621 957 A2**
(43) Date of publication of application: **01.02.2006**
(21) Application number: 05013357.8
(22) Date of filing: 21.06.2005
(51) Int. Cl.: G06F 1/00

(54) **A method for protecting a computer from suspicious objects**

(30) Priority: 06.07.2004 US 883676
(71) Applicant: Aladdin Knowledge Systems, Ltd., Tel Aviv 61110 (IL)
(72) Inventor: Cohen, Oded, Kiriat Tivon 36091 (IL); Margalit, Yanki, Ramat Gan 5223 (IL); Margalit, Dany, Ramat Chen 5223 (IL)
(74) Representative: Geyer, Fehners & Partner

(57) **Abstract**

In an inspection facility (e.g. at a gateway server, at a proxy server, at a firewall to a network, at an entrance to a local area network or even at the user's computer) connected to an anti-virus center for updates, a method for protecting a computer from suspicious objects (e.g. a file, an executable, a Web page, an email message, etc.), the method comprising the steps of: inspecting an object; upon determining the object as suspicious, holding the object in quarantine (e.g. preventing from the object to be forwarded to its destination) for a time period, thereby enabling the inspection facility to be updated during the time period by the anti-virus center; upon ending of the time period, re-inspecting the object, thereby inspecting the object by updated inspection tests; and upon determining the object as malicious by the re-inspection, blocking the object, otherwise forwarding the object toward its destination.

## Description

### Field of the Invention

The present invention relates to the field of computer virus filtering. More particularly, the invention relates to a method for protecting a computer from a suspicious object.

### Backctround of the Invention

The term "inspection" refers in the art to the activity of detecting viruses and other forms of maliciousness. A well known inspection method is looking for "virus signature", a sequence of bytes that characterizes a virus infection, within an object. While virus signature is a method for detecting known viruses, sometimes more sophisticated methods are required for detecting unknown malicious objects. One of these methods is known in the art as emulation, i.e. executing the code of an executable under control.

Viruses and other malicious forms may harm a computer in a variety of ways, such as modifying operating system executables, the FAT (File Allocation Table) of a computer, changing the registry values, etc. Thus, when an executable cannot be indicated as malicious (e.g. by virus signature methods), but its code comprises invocation of functions that malicious forms use, the executable can be considered as suspicious.

While malicious objects are blocked and harmless objects are passed on toward their destination, there is a question of how to treat a suspicious object. In the prior art, it is common to send a suspicious object toward its destination, with a warning thereof. When a user tries to open the object, e.g. an email message, a warning is displayed and the user is given the opportunity to cancel processing the suspicious object. However, the majority of the users ignore warnings, especially due to the tremendous number of messages and warnings that a user gets while operating his computer, and consequently exposes their computer to malicious objects.

Therefore, there is an object of the present invention to protect a computer from suspicious objects.

Other objects and advantages of the invention will become apparent as the description proceeds.

### Summary of the Invention

In an inspection facility (e.g. at a gateway server, at a proxy server, at a firewall to a network, at an entrance to a local area network or even at the user's computer) connected to an anti-virus center for updates, a method for protecting a computer from suspicious objects (e.g. a file, an executable, a Web page, an email message, etc.), the method comprising the steps of: inspecting an object; upon determining the object as suspicious, holding the object in quarantine (e.g. preventing from the object to be forwarded to its destination) for a time period, thereby enabling the inspection facility to be updated during the time period by the anti-virus center; upon ending of the time period, re-inspecting the object, thereby inspecting the object by updated inspection tests; and upon determining the object as malicious by the re-inspection, blocking the object, otherwise forwarding the object toward its destination.

The method may further comprise: inspecting at said inspection facility the object during the time period by at least one new inspection method (i.e. that has not been used previously for inspecting the object); and upon determining the object as malicious, informing the anti-virus center with the findings of the inspection. The inspection method may be, for example, emulation of the object, controlled execution of the object by automatic means, controlled execution of the object by a human factor, etc. An object can be determined as suspicious also by a test, e.g. an unusual number of objects having the same CRC.

The scope of the present invention also includes a system, for protecting a computer, that comprises at least the inspection facility, and preferably also the anti-virus center.

### Brief Description of the Drawings

The present invention may be better understood in conjunction with the following figures:
Fig. 1 schematically illustrates a system in which the present invention may be implemented.
Fig. 2 is a flowchart of a method for protecting a computer from a suspicious object, according to a preferred embodiment of the invention.
Fig. 3 schematically illustrates the tests that may be carried out during the quarantine time, according to one embodiment of the invention.

### Detailed Description of Preferred Embodiments

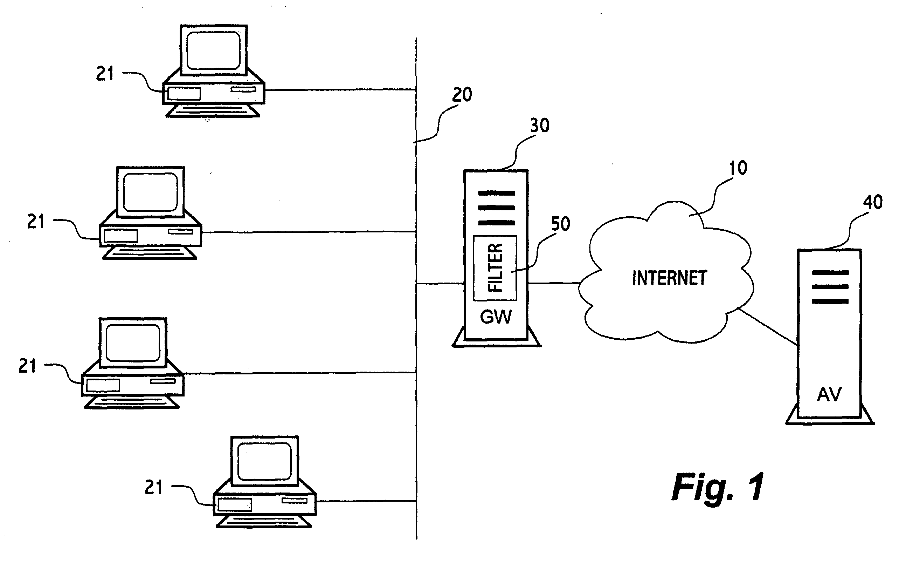

Fig. 1 schematically illustrates a system in which the present invention may be implemented. The computers 21 are connected to the local area network 20. The local area network 20 is connected to the Internet 10. The gateway server 30 is interposed between the local area network 20 and the internet 10. Thus, every object that enters the network 20 can be inspected at the gateway server 30.

At the gateway server 30 a filtering facility 50 filters files that arrive to the gateway in their path to the destination, one or more of the computers 21. The filtering facility 50 is connected via the Internet to a server 40 of an anti-virus company. The connection enables the filtering facility 50 to be updated, i.e. by the latest virus signatures and other filtering tools.

At a gateway, an object that has been determined as malicious is typically "blocked", i.e. not passed on toward its destination. However, as specified above, in addition to the situation where an object is classified as malicious or harmless, there is a situation where an object is suspicious.

There are a variety of inspection methods, like identifying virus signatures within an object, and emulation. A virus signature is a string of characters specific to a virus or a family of viruses (e.g. that have been composed by the same programmer with the same routines). Some of the inspection methods, such as emulation, analyze an object. An object may be of a human readable text (e.g. a script file), or compiled code (e.g. Windows EXE file). In a readable object, calls to a function can be recognized by scanning the text, however in order to process a compiled object, the object should disassembled (converted to Assembly computer language), and then be scanned.

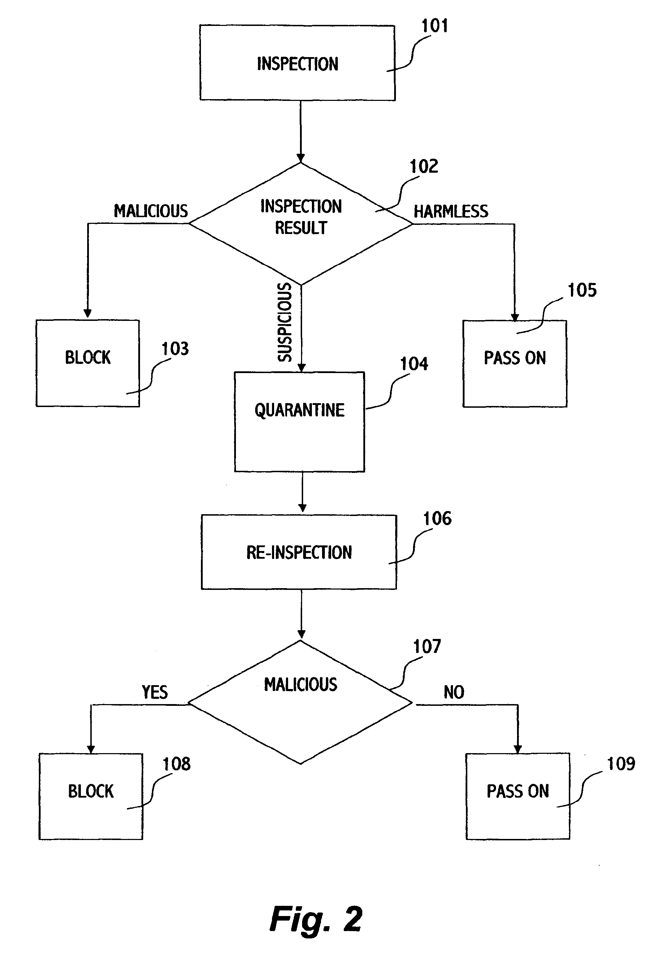

Fig. 2 is a flowchart of a method for protecting a computer from a suspicious object, according to a preferred embodiment of the invention.
On block 101, the object is inspected.

For example, if an inspection process of a Windows EXE file has detected usage of registry access functions, then further inspection analysis should be carried out in order to determine the purpose of those functions. However, if the inspection fails to determine what the registry functions intend to do with the registry, then the EXE file can be considered as suspicious.

An object may be determined as suspicious also by a dedicated test thereof. For example, the CRC (Cyclic Redundancy Checks) value of every object that passes through a gateway server can be calculated and stored in a database. When a certain CRC value appears more often than usually, it may indicate that objects having said CRC value are suspicious. The CRC may be calculated for the whole object, a part of it, a specific part of it (e.g. a function) and so forth.

Thus, an object may be indicated as suspicious because the tests for determining maliciousness failed to determine the object as malicious despite of the fact the object comprises common operations of malicious objects, such as amending the registry. However, an object may be determined as suspicious also by dedicated tests thereof, e.g. indication of an abnormal number of objects of the same kind (e.g. a specific program, specific CRC value of certain functions, etc.) that pass through a gateway, because this is what happens in a virus outbreak.

### From block 102:

If the inspection determines that the object is harmless than the object is forwarded to its destination, as denoted by block 105.

If the inspection determines that the object is malicious, the object is blocked, as denoted by block 103.

However, if the inspection determines that the object is suspicious, the object is put into quarantine (i.e. delayed) for a time period (e.g. a few hours, a day, etc.), as denoted by block 104. Afterwards the object is re-inspected, as denoted by block 106.

In case there is a virus outbreak, if the inspection facility is connected to an anti-virus company (e.g. via the Internet), during the quarantine time the testing tables (e.g. virus signatures) upon which the object is inspected may be updated by the anti-virus company. Thus, after the quarantine time, when the delayed object is re-inspected (block 106), the inspection facility may be updated to recognize the new virus, and consequently new forms of maliciousness will be filtered.

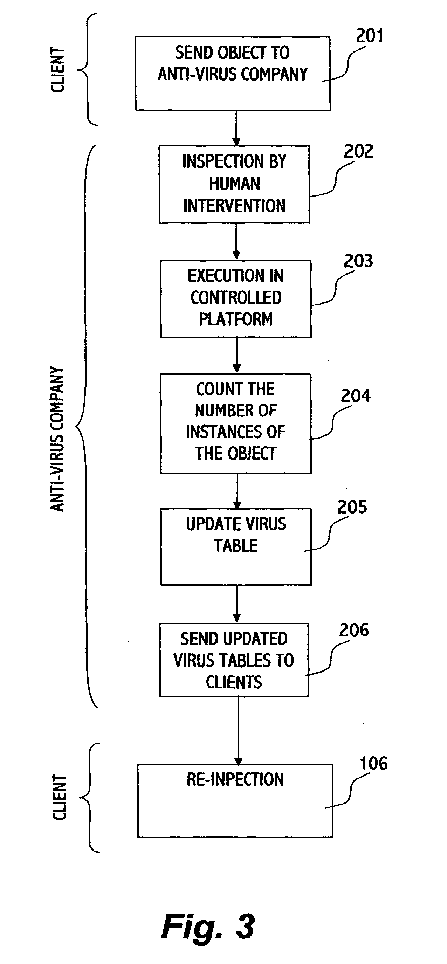

Fig. 3 schematically illustrates the tests that may be carried out during the quarantine time, according to one embodiment of the invention.

At block 201, the suspicious object is sent to the anti-virus company for further inspection. The anti-virus company may inspect the object by human intervention, as denoted by block 202. This is useful especially for objects in which a malicious code is activated by a user interface operation, like clicking on a specific button. The object may be executed under a controlled platform, e.g. emulation, as denoted by block 203. Another test that the anti-virus company may perform is counting the number of instances of the same object that are sent from the clients, as denoted by block 204. For example, when a certain suspicious object is send from or to an unusual number of clients (e.g. more than 30), it may indicate a virus outbreak.

After all the tests are complete, and a new virus or malicious form has been detected, the anti-virus company may update its virus table (e.g. by adding the virus signature of a new discovered virus) as denoted by block 205, and propagate it to its users, other gateway servers, anti-virus companies, and so forth, as denoted by block 206.

At the client side, the suspicious object is re-inspected by the updated anti-virus tables, as denoted by block 106.

It should be noted that although the examples herein refer to virus signatures, other anti-virus tests may also be updated, such as providing new versions of a testing procedure, adding new procedures to the inspection program of the gateway server, and so forth.

It should be noted that although the present invention has been described as herein as implemented by a gateway server, the present invention can be implemented also by a firewall server, etc., and even by the end user's computer.

The following elements play a role with regard to the present invention:
- a client;
- an inspection facility operating in an entry point to said client;
- an anti-virus center, which concentrates information about viruses and other malicious forms from said client and other clients, investigate new viruses and other malicious forms, and propagate its findings (e.g. virus signatures of new viruses) to its clients, including said client.

Thus, when implementing the present invention on a gateway server, the following elements play a role with regard to the present invention:
- a client;
- an inspection facility (an anti-virus program) operating at the gateway;
- an anti-virus center, which concentrates information about viruses and other malicious forms from said client and other clients, investigate new viruses and other malicious forms, and propagate its findings (e.g. virus signatures of new viruses) to its clients, including said client.

When implementing the present invention on a user computer, the following elements play a role with regard to the present invention:
- a client, e.g. a web browser operating at a user's computer;
- an inspection facility, i.e. an anti-virus program operating at the user's computer;
- an anti-virus center, which concentrates information about viruses and other malicious forms from said client and other clients, investigate new viruses and other malicious forms, and propagate its findings (e.g. virus signatures of new viruses) to its clients, including said client. The anti-virus center may be also a program running on the same user's computer

Those skilled in the art will appreciate that the invention can be embodied by other forms and ways, without losing the scope of the invention. The embodiments described herein should be considered as illustrative and not restrictive.

## Claims

1. In an inspection facility connected to an anti-virus center for updates, a method for protecting a computer from suspicious objects, the method comprising the steps of:
- inspecting an object;
- upon determining said object as suspicious, holding said object into quarantine for a time period, thereby enabling said inspection test(s) of said facility to be updated during said time period by said anti-virus center;
- upon ending of said time period, re-inspecting said object, thereby inspecting said object by updated inspection test(s); and
- upon determining said object as malicious by said re-inspection, blocking said object, otherwise forwarding said object toward its destination.

2. A method according to claim 1, further comprising:
- at said inspection facility, inspecting said object during said time period by at least one new inspection method; and
- upon determining said object as malicious, informing said anti-virus center with the findings of the inspection.

3. A method according to claim 2, wherein said at least one new inspection method is selected from a group comprising: emulation of said object, controlled execution of said object by automatic means, controlled execution of said object by a human factor.

4. A method according to one of the claims 1 to 3, wherein said object is selected from a group comprising: a file, an executable, a Web page, an email message.

5. A method according to one of the claims 1 to 4, wherein said object is determined as suspicious by a dedicated test thereof.

6. A method according to claim 5, wherein said test is based on a CRC value of said object.

7. A method according to claim 5, wherein said suspicious is determined by an unusual number of objects passing through said inspection facility in a time period and each of which having the same CRC value of a member selected from a group comprising: the whole of said object, a part of said object, a specific part of said object, a function of said object.

8. A method according to one of the claims 1 to 7, wherein said quarantine comprises preventing said object from reaching its destination.

9. A method according to one of the claims 1 to 8, wherein said inspecting is carried out at a facility selected from a group comprising: a gateway server, a proxy server, a firewall to a network, an entrance to a local area network, said computer.

10. A system for protecting a computer, comprising:
- an inspection facility operative to inspect objects sent to the computer; and
- for each object for which said inspecting determines that said each object is suspicious: to quarantine said each object.

11. The system of claim 10, wherein said objects are sent to the computer via a network, and wherein said inspection facility is located at a site selected from the group consisting of: a gateway server of said network, a proxy server of said network, a firewall to said network and an entrance to said network.

12. The system of claim 10, wherein said inspection facility is located at the computer.

13. The system of one of the claims 10 to 12, wherein said quarantining is for a time period, and wherein said inspection facility is further operative:
- for each said object for which said inspecting determines that said each object is suspicious: to re-inspect said each object after said time period.

14. The system of one of the claims 10 to 13, further comprising:
an anti-virus center for providing said inspection facility with tools for said inspection and said re-inspection, said re-inspection including, for each said object for which said inspecting determines that said each object is suspicious, testing said each object using at least one tool provided to said inspection facility by said anti-virus center while said each object is quarantined.
